# EUROPÄISCHE PATENTSCHRIFT

(11) **EP 3 404 640 B1**
(45) Veröffentlichungstag und Bekanntmachung des Hinweises auf die Patenterteilung: **16.06.2021**
(21) Anmeldenummer: 16884664.0
(22) Anmeldetag: 13.08.2016
(51) Int. Cl.: G08G 1/16, B60Q 5/00, B60W 50/00, B60L 3/00

(54) **AKUSTISCHE FUSSGÄNGERWARNVORRICHTUNG MIT AKTIVER FRÜHWARNFUNKTION ZUR VERWENDUNG IN EINEM ALTERNATIVKRAFTSTOFF-FAHRZEUG**
PEDESTRIAN SOUND WARNING DEVICE HAVING ACTIVE EARLY-WARNING FUNCTION FOR USE IN NEW-ENERGY VEHICLE
DISPOSITIF D'ALARME SONORE POUR PIÉTON À FONCTION D'AVERTISSEMENT PRÉCOCE ACTIVE POUR UTILISATION DANS UN VÉHICULE À ÉNERGIE ALTERNATIVE

(30) Priorität: 13.01.2016 CN 201610018405
(43) Veröffentlichungstag der Anmeldung: 21.11.2018
(73) Patentinhaber: Jilin Hangsheng Electronics Co., Ltd., Jilin City, Jilin 132013 (CN)
(72) Erfinder: HUANG, Haiyang, Jilin City, Jilin 132013 (CN); WU, Peng, Jilin City, Jilin 132013 (CN)
(74) Vertreter: Waldhauser, Dirk
(86) Internationale Anmeldenummer: PCT/CN2016/095076
(87) Internationale Veröffentlichungsnummer: WO 2017/121110

(56) Entgegenhaltungen:
- CN-A- 103 974 171
- CN-A- 104 464 182
- CN-A- 105 383 376
- CN-A- 105 489 063
- CN-U- 201 780 641
- CN-U- 202 652 374
- CN-U- 204 196 774
- CN-U- 205 281 809
- DE-A1-102005 035 040
- DE-A1-102010 048 463
- US-A1- 2012 166 042
- US-A1- 2013 158 795
- US-A1- 2015 267 628

## Beschreibung

### Technisches Gebiet

Die vorliegende Erfindung betrifft den Bereich der akustischen Warnung, insbesondere eine akustische Fußgänger-Warneinrichtung mit einer aktiven Vorwarnfunktion für ein Alternativkraftstoff-Fahrzeug.

### Stand der Technik

In der modernen Gesellschaft sind Fahrzeuge bereits zu einem unentbehrlichen Werkzeug für das menschliche Leben geworden und die Ausfahrt wird durch Privatfahrzeuge und Busse erleichtert. Fahrzeug ersetzen Fahrräder zunehmend als ein wichtiges Verkehrsmittel für das menschliche Leben. Mit der Verschlimmerung globaler Luftverschmutzung in den letzten Jahren legen viele Länder zunehmenden Wert auf den Umweltschutz und die Vorbeugung und Bekämpfung der Luftverschmutzung, wobei der Ausstoß von Fahrzeugabgas als eine Hauptquelle der Luftverschmutzung angesehen wird. Bei einem Alternativkraftstoff-Fahrzeug (Neu-Energie-Fahrzeug, englisch: New Energy Vehicle) handelt es sich um ein Fahrzeug mit fortschrittlichem technischem Prinzip, neuer Technologie und neuartiger Struktur, bei dem ein unkonventioneller Fahrzeug-Kraftstoff als Antriebsquelle oder alternativ dazu unter Verwendung eines herkömmlichen Fahrzeug-Kraftstoffs eine neuartige Fahrzeugantriebseinrichtung eingesetzt wird. Mit dem Aufstieg der Alternativkraftstoff-Fahrzeuge entwickeln sich allmählich betroffene Technologien. Ein Alternativkraftstoff-Fahrzeug wird mittels eines neuartigen Motors angetrieben, der sehr leises Geräusch ausgibt, das vom Umgebungsgeräusch übertönt wird, so dass das Fahrzeug sich in einem "geräuscharmen Betriebszustand befindet und also sich ein Problem einstellt, dass das Alternativkraftstoff-Fahrzeug beim Fahrt wenig Geräusche erzeugt und unauffällig für Fußgänger wirkt, wodurch ein Verkehrsunfall leicht verursacht werden könnte. Bei einem zurzeit auf dem Markt erhältlichen Fußgänger-Warnsystem zum Lösen des vorstehenden Problems eines zu leisen Geräusches beim Betrieb eines Alternativkraftstoff-Fahrzeugs wird Ton passiv ausgegeben, wobei also das Fahrzeug stets einen Fußgänger-Warnton

ausgibt, unabhängig davon, ob vorne eine Person vorhanden ist, so dass bei Abwesenheit von Fußgängern eine Lärmbelastung verursacht wird, und wobei zudem der Bedarf nach entfernungsspezifischem Warnton nicht gedeckt werden kann.

Die US 2013 158 795 A1 offenbart eine Vorrichtung und ein Verfahren zum Erzeugen künstlicher Fahrgeräusche für ein Kraftfahrzeug. Umgebungsbedingungen, Objekte und / oder andere Verkehrsteilnehmer werden über eine Umgebungssensoreinheit erfasst. Abhängig davon und ggf. abhängig von fahrzeuginternen Informationen werden Fahrgeräusche mit besonderen Eigenschaften erzeugt. Auf diese Weise können andere Verkehrsteilnehmer auf leise fahrende Fahrzeuge aufmerksam gemacht werden.

### Kurzbeschreibung der Erfindung

Daher liegt der vorliegenden Erfindung die Aufgabe zugrunde, eine akustische Fußgänger-Warneinrichtung mit einer aktiven Vorwarnfunktion für ein Alternativkraftstoff-Fahrzeug bereitzustellen, womit das vorstehende Problem effektiv gelöst werden kann.

Eine akustische Fußgänger-Warneinrichtung mit einer aktiven Vorwarnfunktion für ein Fahrzeug mit neuartigem Energieantrieb umfasst ein Hauptsteuermodul, ein Sprachchipmodul, ein Leistungsverstärkermodul und ein Infrarot-Detektionsmodul, wobei das Hauptsteuermodul jeweils mit dem Sprachchipmodul und dem Infrarot-Detektionsmodul und das Sprachchipmodul mit dem Leistungsverstärkermodul verbunden sind, wobei das Infrarot-Detektionsmodul erfasst, ob in der Umgebung des Fahrzeugs eine Person vorhanden ist, und ein Infrarot-Detektionssignal ausgibt, und wobei das Hauptsteuermodul das Infrarot-Detektionssignal empfängt und in Abhängigkeit von dem Infrarot-Detektionssignal einen Abspielbefehl an das Sprachchipmodul sendet, das ein akustisches Signal an das Leistungsverstärkermodul sendet, das einen Lautsprecher zum Abspielen des akustischen Signals antreibt; wobei die Warneinrichtung ferner einen Straßenabschnitt-Speicherdrehknopf umfasst, der mit dem Hauptsteuermodul elektrisch verbunden ist, wobei durch Betätigen des Straßenabschnitt-Speicherdrehknopfs, beispielweise beim Fahren auf einer Autobahn, ein Warnton voreingestellt und durch Drehen des Straßenabschnitt-Speicherdrehknopfs in eine bestimmte Richtung die entsprechende Lautstärke geregelt werden kann, so dass bei später/nächster Vorbeifahrt an diesem Straßenabschnitt das Hauptsteuermodul eine Tonausgabe mit der voreingestellten Lautstärke bewirkt, wenn das Infrarot-Detektionsmodul keinen Fußgänger detektiert.

Nach einem Ausführungsbeispiel der vorliegenden Erfindung umfasst sie ferner ein Umgebungsgeräusch-Signalerfassungsmodul, das mit dem Hauptsteuermodul verbunden ist und das ein Schalldrucksignal des äußeren Umgebungsgeräusches an das Hauptsteuermodul sendet, das in Abhängigkeit von dem Schalldrucksignal die Lautstärke des abzuspielenden akustischen Signals bestimmt und in Abhängigkeit von der Lautstärke die Ausgangsleistung des Leistungsverstärkermoduls steuert.

Nach einem Ausführungsbeispiel der vorliegenden Erfindung umfasst sie ferner ein CAN-Sendeempfängermodul, über das das Hauptsteuermodul mit einer Steuerung des Alternativkraftstoff-Fahrzeugs verbunden ist, um ein von der Steuerung des Alternativkraftstoff-Fahrzeugs gesendetes Zustandssignal zu empfangen, das ein Motordrehzahl- und Fahrzeuggeschwindigkeitssignal umfasst, wobei das Hauptsteuermodul in Abhängigkeit von dem Zustandssignal Fahrdaten erstellt und die Fahrdaten an das Sprachchipmodul sendet, das anhand der Fahrdaten ein Fahrzeugmotor-Geräuschsignal erzeugt.

Nach einem Ausführungsbeispiel der vorliegenden Erfindung umfasst sie ferner ein Plosiveschutz-Stromkreismodul, das eine Diode, einen ersten elektrischen Widerstand, einen zweiten elektrischen Widerstand, eine NPN-Triode, einen ersten gepolten Kondensator, einen dritten elektrischen Widerstand und einen vierten elektrischen Widerstand, wobei der vierte elektrische Widerstand an einem Ende geerdet und an dem anderen Ende mit einem Emitter der NPN-Triode verbunden ist, wobei der erste gepolte Kondensator mit dem dritten elektrischen Widerstand parallel geschaltet ist, um einen ersten Unterstromkreis zu bilden, wobei der erste elektrische Widerstand an einem Ende mit einem Ende des zweiten elektrischen Widerstands verbunden ist, um einen ersten Verbindungspunkt zu bilden, wobei die Diode an einem Ende mit einem Stromversorgungsmodul oder dem Leistungsverstärkermodul und an dem anderen Ende mit dem ersten Verbindungspunkt verbunden ist, wobei der zweite elektrische Widerstand an dem anderen Ende mit einem Kollektor der NPN-Triode verbunden ist, wobei der erste Unterstromkreis an einem Ende mit dem anderen Ende des ersten elektrischen Widerstands verbunden und dieser Verbindungspunkt mit einer Basis der NPN-Triode verbunden ist, wobei der erste Unterstromkreis an einem zweiten Ende an eine zur Erdung dienende Verbindungsleitung für den vierten elektrischen Widerstand angeschlossen ist, wobei ein erstes Stromausgangskabel an einem Ende an eine Verbindungsleitung zwischen dem vierten elektrischen Widerstand und dem Emitter der NPN-Triode angeschlossen und an dem anderen Ende mit dem Lautsprecher verbunden ist, und wobei Strom über ein Ende der Diode einströmt und nach Strombegrenzung durch den ersten elektrischen Widerstand zur Aufladung des ersten gepolten Kondensators dient, dabei nun die NPN-Triode einen Zustand mit hohem Widerstand darstellt und bei einer Spannung des ersten gepolten Kondensators, die einen Schwellenwert erreicht, die NPN-Triode in einen zugeschalteten Zustand gebracht wird.

Nach einem Ausführungsbeispiel der vorliegenden Erfindung umfasst sie ferner ein Lautstärkeregelungs-Stromkreismodul und ein RC-Formungsstromkreismodul, wobei unter Steuerung von dem Hauptsteuermodul das Lautstärkeregelungs-Stromkreismodul ein PWM-Signal mit Rechteckwellen erzeugt, welches PWM-Signal nach Formung über das RC-Formungsstromkreismodul an das Leistungsverstärkermodul gesendet wird, um eine Lautstärkeregelung durchzuführen, wobei das RC-Formungsstromkreismodul einen fünften elektrischen Widerstand, einen sechsten elektrischen Widerstand, einen zweiten ungepolten Kondensator und einen dritten ungepolten Kondensator umfasst, wobei der fünfte elektrische Widerstand in Reihe mit dem zweiten ungepolten Kondensator geschaltet und an einem Ende mit dem Lautstärkeregelungs-Stromkreismodul verbunden ist, während ein Ende des zweiten ungepolten Kondensators geerdet ist, wobei der sechste elektrische Widerstand in Reihe mit dem dritten ungepolten Kondensator geschaltet und an einem Ende an eine Verbindungsleitung zwischen dem fünften elektrischen Widerstand und dem zweiten ungepolten Kondensator angeschlossen ist, während ein Ende des dritten ungepolten Kondensators geerdet ist, wobei ein zweites Ausgangskabel an einem Ende an eine Verbindungsleitung zwischen dem sechsten elektrischen Widerstand und dem dritten ungepolten Kondensator angeschlossen und an dem anderen Ende mit dem Leistungsverstärkermodul verbunden ist.

Nach einem Ausführungsbeispiel der vorliegenden Erfindung umfasst sie ferner einen Digitalfilter, wobei ein Schalldrucksignal des äußeren Umgebungsgeräusches durch das
Umgebungsgeräusch-Signalerfassungsmodul echtzeitig erfasst und an das Hauptsteuermodul sendet wird, welches Hauptsteuermodul das Schalldrucksignal an den Digitalfilter sendet, in dem eine zyklische Abtastung erfolgt und jede der Proben quantifiziert und kodiert wird, um ein digitales Signal zu erzeugen, das in ein analoges Signal umgewandelt wird, wobei das analoge Signal verarbeitet wird und somit eine Schalldruckinformation erhalten wird.

Nach einem Ausführungsbeispiel der vorliegenden Erfindung ist ferner vorgesehen, dass das Hauptsteuermodul einen Steuerpin BUSY des Sprachchipmoduls überwacht und die Dauer einer aktuell von dem Sprachchipmodul abgespielten Audiodatei feststellt, wobei unter Steuerung von dem Hauptsteuermodul ein Steuerbefehl zum Abspielen der nächsten Audiodatei an das Sprachchipmodul gesendet wird, wenn es festgestellt wird, dass die verbleibende Abspieldauer der Audiodatei einen vorbestimmten Dauerschwellenwert erreicht.

Nach einem Ausführungsbeispiel der vorliegenden Erfindung ist ferner vorgesehen, dass das Umgebungsgeräusch-Signalerfassungsmodul einen Mikrofonverstärker, einen vierten Kondensator, einen fünften Kondensator und einen siebten elektrischen Widerstand umfasst, wobei ein von einem Mikrofon erfasstes Signal mittels einer Eingangsleitung jeweils über den vierten Kondensator und den siebten elektrischen Widerstand mit einem IN-Pin bzw. einem BIAS-Pin des Mikrofonverstärkers verbunden ist, wobei es sich bei dem IN-Pin um einen Signaleingangspin und bei dem BIAS-Pin um einen Spannungskompensationspin handelt, wobei ein SHND-Pin des Mikrofonverstärkers über den fünften Kondensators geerdet ist und an eine Verbindungsleitung zwischen dem SHND-Pin und dem fünften Kondensator eine Spannung angelegt wird, wobei ein GND-Pin des Mikrofonverstärkers geerdet ist, ein VCC-Pin des Mikrofonverstärkers die Spannung einführt und ein OUT-Pin des Mikrofonverstärkers ein verstärktes Signal an das Hauptsteuermodul ausgibt.

Nach einem Ausführungsbeispiel der vorliegenden Erfindung ist ferner vorgesehen, dass das Hauptsteuermodul und das Sprachchipmodul über einen seriellen SPI-Bus miteinander verbunden sind. In der Verbindungsleitung, die das Stromversorgungsmodul mit dem Sprachchipmodul und dem Leistungsverstärkermodul verbindet, ist ein spannungsabhängiger Widerstand, i.e. Varistor vorgesehen.

Die erfindungsgemäße akustische Fußgänger-Warneinrichtung mit einer aktiven Vorwarnfunktion für ein Alternativkraftstoff-Fahrzeug weist ein Infrarot-Detektionsmodul und ein Umgebungsgeräusch-Signalerfassungsmodul auf und kann aktiv feststellen, ob ein Ton ausgegeben werden soll, und den Fußgänger-Warnton weitestgehend ausschalten bzw. verringern, womit das Problem gelöst wird, dass der Fußgänger-Warnton stets ausgegeben wird, unabhängig davon, ob vorne ein Fußgänger vorhanden ist, wobei in Abhängigkeit von dem Umgebungs-Schalldruck echtzeitig ein geeigneter Warnton ausgegeben werden kann und zudem auch eine Download-Schnittstelle zur Verfügung steht, so dass der Benutzer einen gewählten Ton herunterladen kann, und wobei des Weiteren auch ein Straßenabschnitt-Speicherdrehknopf sowie weitere Funktionen zur Verfügung stehen, was für eine intelligentere Bedienung sorgt.

### Kurze Beschreibung der Zeichnungsfiguren

Zur besseren Erläuterung der Ausführungsbeispiele nach der vorliegenden Erfindung oder der Ausgestaltungen im Stand der Technik wird nachfolgend die in den Ausführungsbeispielen verwendete beiliegende Zeichnung kurz beschrieben, wobei es sich versteht, dass die nachstehende Zeichnungen lediglich einige Ausführungsbeispiele der Erfindung darstellt und es für Durchdurchschnittsfachleute auf diesem Gebiet möglich ist, ohne erfinderische Tätigkeiten anhand solcher Zeichnung weitere Zeichnungen zu erhalten. Darin zeigen:
FIG. 1 den Stromkreis einer akustischen Fußgänger-Warneinrichtung mit einer aktiven Vorwarnfunktion für ein Alternativkraftstoff-Fahrzeug nach einem Ausführungsbeispiel der vorliegenden Erfindung in einer schematischen strukturellen Darstellung,
FIG. 2 den Arbeitsablauf einer akustischen Fußgänger-Warneinrichtung mit einer aktiven Vorwarnfunktion für ein Alternativkraftstoff-Fahrzeug nach einem Ausführungsbeispiel der vorliegenden Erfindung,
FIG. 3 den Plosiveschutz-Stromkreis einer akustischen Fußgänger-Warneinrichtung mit einer aktiven Vorwarnfunktion für ein Alternativkraftstoff-Fahrzeug nach einem Ausführungsbeispiel der vorliegenden Erfindung in einer schematischen Darstellung,
FIG. 4 den PWM-Lautstärkenformungsstromkreis einer akustischen Fußgänger-Warneinrichtung mit einer aktiven Vorwarnfunktion für ein Alternativkraftstoff-Fahrzeug nach einem Ausführungsbeispiel der vorliegenden Erfindung in einer schematischen Darstellung,
FIG. 5 den Mikrofon-Verstärkerstromkreis in dem Umgebungsgeräusch-Signalerfassungsmodul einer akustischen Fußgänger-Warneinrichtung mit einer aktiven Vorwarnfunktion für ein Alternativkraftstoff-Fahrzeug nach einem Ausführungsbeispiel der vorliegenden Erfindung in einer schematischen Darstellung.

### Beschreibung der Ausführungsarten

Nachfolgend wird unter Bezugnahme auf beiliegende Zeichnungen auf die vorliegende Erfindung näher eingegangen, wobei beispielhafte Ausführungsbeispiele der Erfindung erläutert werden. Nachfolgend werden Ausgestaltungen der erfindungsgemäßen Ausführungsbeispiele anhand beiliegende Zeichnungen in den Ausführungsbeispielen vollständig und klar erläutert, wobei es sich versteht, dass die beschriebenen Ausführungsbeispiele lediglich einen Teil der Ausführungsbeispiele anstatt sämtlicher Ausführungsbeispiele darstellen. Alle anderen Ausführungsbeispiele, die von Durchschnittsfachleuten auf diesem Gebiet anhand des Ausführungsbeispiels der Erfindung ohne erfinderische Tätigkeiten erhalten werden, gehören ebenfalls zu dem Schutzumfang der Erfindung. Unter Bezugnahme auf die Zeichnungen werden die Ausgestaltungen nach der vorliegenden Erfindung anhand konkreter Ausführungsbeispiele umfassend beschrieben.

Die nachfolgend verwendeten Begriffe "erste", "zweite", usw. dienen einer Unterscheidung bei der Beschreibung, ohne andere besondere Bedeutung anzudeuten.

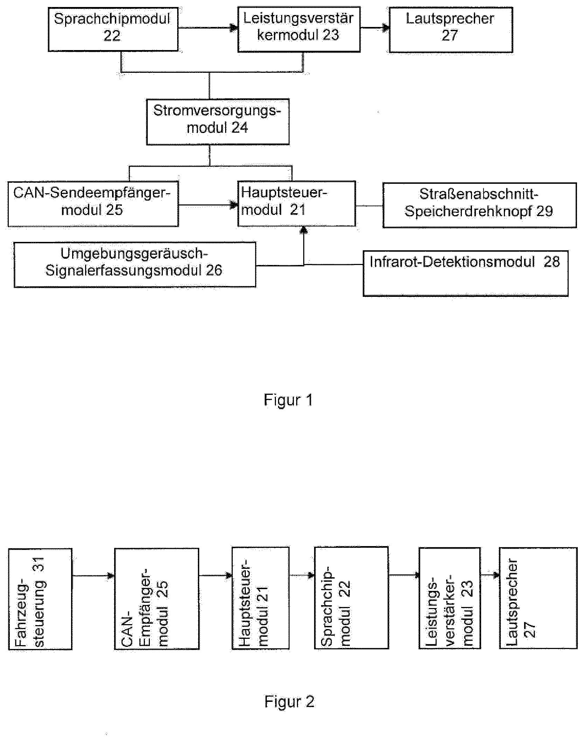

Wie aus FIG 1 und 2 zu entnehmen ist, umfasst eine akustische Fußgänger-Warneinrichtung mit einer aktiven Vorwarnfunktion für ein Alternativkraftstoff-Fahrzeug nach der vorliegenden Erfindung ein Hauptsteuermodul 21, ein Sprachchipmodul 22, ein Leistungsverstärkermodul 23, ein Infrarot-Detektionsmodul 28 und ein Umgebungsgeräusch-Signalerfassungsmodul 26. Das Hauptsteuermodul 21 sendet einen Abspielbefehl an das Sprachchipmodul 22, das ein akustisches Signal an das Leistungsverstärkermodul 23 sendet, das einen Lautsprecher 27 zum Abspielen des akustischen Signals antreibt.

Das Infrarot-Detektionsmodul 28 erfasst, ob in der Umgebung des Fahrzeugs eine Person vorhanden ist, und gibt ein Infrarot-Detektionssignal aus, wobei das Hauptsteuermodul 21 das Infrarot-Detektionssignal empfängt und in Abhängigkeit von dem Infrarot-Detektionssignal einen Abspielbefehl an das Sprachchipmodul 22 sendet, das ein akustisches Signal an das Leistungsverstärkermodul 23 sendet, das einen Lautsprecher 27 zum Abspielen des akustischen Signals antreibt.

Die akustische Fußgänger-Warneinrichtung mit einer aktiven Vorwarnfunktion für ein Alternativkraftstoff-Fahrzeug nach dem vorstehenden Ausführungsbeispiel weist in ihrer vorderen Bereich ein Infrarot-Detektionsmodul auf, das über eine Infrarotsonde-Schnittstelle verfügt, wobei die Sonde auf einem pyroelektrischen Sensor basiert ist, anhand der Stärke eines für menschlichen Körper charakteristischen Signals mit einer Infrarotwellenlänge von 10 um feststellen kann, ob ein Fußgänger vorbeigeht, und ein Infrarot-Detektionssignal ausgibt.

Bei einem Fußgänger innerhalb des Empfangsbereichs des pyroelektrischen Sensors erzeugt der pyroelektrische Sensor ein entsprechendes Spannungssignal, also ein Infrarot-Detektionssignal, wobei das Spannungssignal über einen Filterstromkreis entrauscht und zu einem AD-Erfassungsabschnitt zugeführt wird, um das von dem pyroelektrischen Sensor erfasste Analogsignal in ein Digitalsignal umzuwandeln, das in das Hauptsteuermodul 21 gelangt, daraufhin bei einer Feststellung, dass vorne ein Fußgänger vorhanden ist, die Ausgabe eines Warntons bewirkt wird.

Der Straßenabschnitt-Speicherdrehknopf 29 ist mit dem Hauptsteuermodul 21 elektrisch verbunden. Wenn das Fahrzeug bis zu einem Straßenabschnitt fährt, kann der Benutzer durch Betätigen des Straßenabschnitt-Speicherdrehknopfs 29 einen Warnton voreinstellen und durch Drehen des Straßenabschnitt-Speicherdrehknopfs 29 in eine bestimmte Richtung die entsprechende Lautstärke regeln. Beim Fahren beispielsweise auf einer Autobahn kann der Benutzer durch Betätigen des Straßenabschnitt-Speicherdrehknopfs 29 die Umgebung des Fahrzeugs speichern, so dass bei später/nächster Vorbeifahrt an dieser Straßenabschnitt das Hauptsteuermodul 21 eine Tonausgabe mit der voreingestellten Lautstärke bewirkt, wenn das Infrarot-Detektionsmodul 28 keinen Fußgänger detektiert, womit eine Belästigung der Anwohner und eine Lärmbelastung vermieden werden. An dem vorderen Ende der akustischen Fußgänger-Warneinrichtung für ein Alternativkraftstoff-Fahrzeug nach der vorliegenden Erfindung ist eine Download-Schnittstelle angebracht, über die der Benutzer einen Ton herunterladen kann.

Das Hauptsteuermodul kann als Mikroprozessor, Einchipprozessor und Einplatinencomputer, usw. ausgebildet sein. Das Hauptsteuermodul 21 und das Sprachchipmodul 22 sind über einen seriellen SPI-Bus miteinander verbunden. In der Verbindungsleitung, die das Stromversorgungsmodul 24 mit dem Sprachchipmodul und dem Leistungsverstärkermodul verbindet, ist ein spannungsabhängiger Widerstand vorgesehen.

Das Umgebungsgeräusch-Signalerfassungsmodul 26 sendet ein Schalldrucksignal des äußeren Umgebungsgeräusches an das Hauptsteuermodul 21, das in Abhängigkeit von dem Schalldrucksignal die Lautstärke des abzuspielenden akustischen Signals bestimmt und in Abhängigkeit von der Lautstärke die Ausgangsleistung des Leistungsverstärkermoduls 23 steuert. Anhand des Schalldrucksignals des äußeren Umgebungsgeräusches kann die Lautheit des Umgebungsgeräusches festgestellt werden, wobei die Lautstärke bei lauten Umgebungsgeräuschen bzw. bei hohem Dezibel erhöht und bei einer leisen Umgebung bzw. bei niedrigem Dezibel verringert wird, wodurch eine Belästigung der Anwohner vermieden werden kann.

Die erfindungsgemäße akustische Fußgänger-Warneinrichtung mit einer aktiven Vorwarnfunktion für ein Alternativkraftstoff-Fahrzeug kann den Schalldruckpegel der Umgebung echtzeitig überwachen und in Abhängigkeit von dem Schalldruckpegel der Umgebung den Schalldruck des von der Fußgänger-Warneinrichtung für ein Alternativkraftstoff-Fahrzeug auszugebenden Tons bestimmen, so dass bei einem geringen durchschnittlichen Schalldruck der Umgebung die Ausgabe einer geringen Schalldruckwerts schon ausreicht, die Aufgabe zur Fußgängerwarnung zu erfüllen.

Die erfindungsgemäße akustische Fußgänger-Warneinrichtung mit einer aktiven Vorwarnfunktion für ein Alternativkraftstoff-Fahrzeug kann eine dauernde, passive Ausgabe einer Fußgängerwarnung vermeiden und in Abhängigkeit von der dynamischen Rückkopplung des Umgebungs-Schalldrucks des Fahrzeugs die Abspiel-Lautstärke steuern, indem die Lautstärke beispielsweise bei einer lauten Kreuzung moderat erhöht und bei einem leisen Wohnbezirk in der Nacht moderat verringert wird, wobei eine Infrarot-Detektionseinheit zum Erfassen dient, ob ein Fußgänger vorhanden ist, daraufhin bei einem erkannten Fußgänger ein Warnton ausgegeben und ansonsten die Ausgabe des Warntons beendet wird.

In einem Ausführungsbeispiel ist das Hauptsteuermodul 21 über ein CAN-Sendeempfängermodul 25 mit einer Steuerung 31 des Alternativkraftstoff-Fahrzeugs verbunden, um ein von der Steuerung 31 des Alternativkraftstoff-Fahrzeugs gesendetes Zustandssignal zu empfangen, das u.a. ein Motordrehzahl- und Fahrzeuggeschwindigkeitssignal umfasst. Das Hauptsteuermodul 21 erstellt Fahrdaten in Abhängigkeit von dem Zustandssignal und sendet die Fahrdaten an das Sprachchipmodul 22, das anhand der Fahrdaten ein Fahrzeugmotor-Geräuschsignal erzeugt, wobei unterschiedliche Motorgeräusche beispielsweise bei einer Fahrgeschwindigkeit von 40 km/h und 80 km/h simuliert werden können.

Die erfindungsgemäße akustische Fußgänger-Warneinrichtung mit einer aktiven Vorwarnfunktion für ein Alternativkraftstoff-Fahrzeug erfasst den aktuellen Zustand des Fahrzeugs über einen CAN-Bus und gibt einen entsprechenden Warnton in Abhängigkeit von dem aktuellen Zustand aus, wobei eine Warnung aktiv, also erst nach Erkennung eines Fußgängers erfolgt und darüber hinaus ein entsprechender Ton in Abhängigkeit von der Entfernung zu dem Fußgänger plangemäß ausgegeben werden kann.

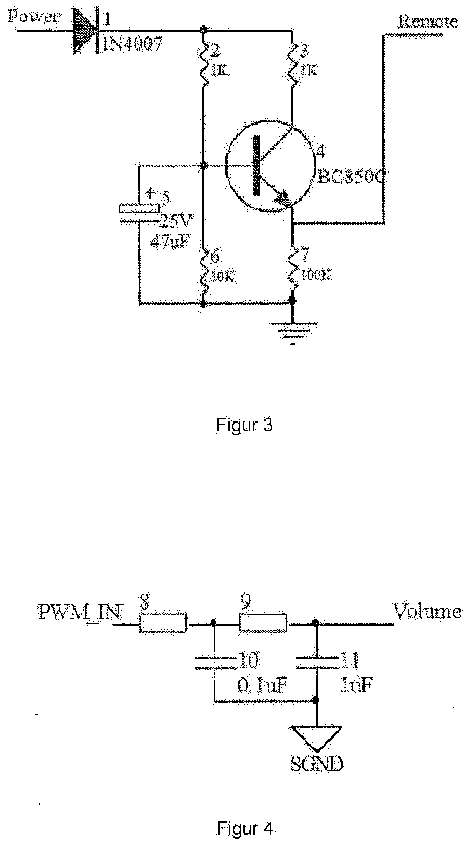

In einem Ausführungsbeispiel ist in der Warneinrichtung ein Popgeräusch/Plosiveschutz-Stromkreismodul vorgesehen. Wie sich aus FIG 3 ergibt, umfasst das Plosiveschutz-Stromkreismodul eine Diode 1, einen ersten elektrischen Widerstand 2, einen zweiten elektrischen Widerstand 3, eine NPN-Triode 4, einen ersten gepolten Kondensator 5, einen dritten elektrischen Widerstand 6 und einen vierten elektrischen Widerstand 7. Der vierte elektrische Widerstand 7 ist an einem Ende geerdet und an dem anderen Ende mit einem Emitter der NPN-Triode 4 verbunden. Der erste gepolte Kondensator 5 ist mit dem dritten elektrischen Widerstand 6 parallel geschaltet, um einen ersten Unterstromkreis zu bilden. Der erste elektrische Widerstand 2 ist an einem Ende mit einem Ende des zweiten elektrischen Widerstands 3 verbunden ist, um einen ersten Verbindungspunkt zu bilden.

Die Diode 1 ist an einem Ende mit einem Stromversorgungsmodul oder dem Leistungsverstärkermodul 23 und an dem anderen Ende mit dem ersten Verbindungspunkt verbunden. Der zweite elektrische Widerstand 3 ist an dem anderen Ende mit einem Kollektor der NPN-Triode 4 verbunden. Der erste Unterstromkreis ist an einem Ende mit dem anderen Ende des ersten elektrischen Widerstands 2 verbunden und dieser Verbindungspunkt ist mit einer Basis der NPN-Triode 4 verbunden.

Der erste Unterstromkreis ist an einem zweiten Ende an eine zur Erdung dienende Verbindungsleitung für den vierten elektrischen Widerstand 7 angeschlossen, wobei ein erstes Stromausgangskabel an einem Ende an eine Verbindungsleitung zwischen dem vierten elektrischen Widerstand 7 und dem Emitter der NPN-Triode 4 angeschlossen und an dem anderen Ende mit dem Lautsprecher verbunden ist. Dabei strömt Strom über ein Ende der Diode 1 ein und dient nach Strombegrenzung durch den ersten elektrischen Widerstand 2 zur Aufladung des ersten gepolten Kondensators 5, wobei nun die NPN-Triode 4 einen Zustand mit hohem Widerstand darstellt und bei einer Spannung des ersten gepolten Kondensators 5, die einen Schwellenwert erreicht, die NPN-Triode 4 in einen zugeschalteten Zustand gebracht wird.

In einem Ausführungsbeispiel ergibt sich die Fußgängerwarnung aus einer genauen Anpassung an den Fahrzeugzustand und den Geräuschzustand. Beim Einschalten wird in der Regel ein Impulssignal an den Lautsprecher gegeben, wodurch ein momentanes Popgeräusch/Plosive des Lautsprechers verursacht und somit die Systemqualität beeinträchtigt wird.

Als Lösung dafür wird das Plosiveschutz-Stromkreismodul eingeschaltet, wobei zum Aufheben des Popgeräusches/Plosives des Lautsprechers hardwareseitig ein Verzögerungsstromkreis und ein Stromkreis zur momentanen Ableitung beim Bestromen über die Stromversorgung eingesetzt werden, wobei ein kombinierter Stromkreis mit einer Diode, einem Kondensator hohen Widerstands und einer Triode zur Unterdrückung der Einflüsse der momentanen Spannung beim Einschalten auf das System verwendet wird. Das Bestromen über die Systemstromversorgung erfolgt durch Steuern des POWER-Pins und nach Strombegrenzung über 2 wird 5 aufgeladen, wobei nun 4 einen hohen Widerstand und Remote einen niedrigen elektrischen Pegel aufweisen. Bei einer Ladespannung von 0,7 V wird 4 zugeschaltet, wobei die Spannung von POWER durch 3 und 7 geteilt wird. Die Spannung von Remote entspricht nun 99/100 der Spannung von Pwer und ein hoher elektrischer Pegel liegt vor.

In einem Ausführungsbeispiel sind in der Warneinrichtung ein Lautstärkeregelungs-Stromkreismodul und ein RC-Formungsstromkreismodul. Wie aus FIG 4 zu entnehmen ist, erzeugt das Lautstärkeregelungs-Stromkreismodul unter Steuerung von dem Hauptsteuermodul ein PWM-Signal mit Rechteckwellen, welches PWM-Signal nach Formung über das RC-Formungsstromkreismodul an das Leistungsverstärkermodul gesendet wird, um eine Lautstärkeregelung durchzuführen.

Die Lautstärkeregelung des Tons kann anhand eines PWM-Verbundalgorithmus erfolgen und dazu wird ein Behandlungsstromkreis zur Umwandlung von PWM in eine durchschnittliche Gleichspannung eingesetzt. Bei der Lautstärkeregelung wird ein Leistungsausgangs-Steuerpin eines Leistungsverstärkerchips hinsichtlich seines analogen Spannungsausgangs über PWM mit einer Auflösung von bis zu 65536 Stufen gesteuert, wobei nach Ausgabe eines Rechtecksignals des PWM-Signals ein quasi-DC-Pegel über das RC-Formungsstromkreismodul auf ähnliche Weise wie bei einer Spannungsanpassung mittels eines "Potentiometer-Drehknopfs¡¡ã erzeugt wird, um eine 1/65535 Teilspannung zu erzeugen.

In einem Ausführungsbeispiel umfasst das RC-Formungsstromkreismodul einen fünften elektrischen Widerstand 8, einen sechsten elektrischen Widerstand 9, einen zweiten ungepolten Kondensator 10 und einen dritten ungepolten Kondensator 11. Der fünfte elektrische Widerstand 8 ist in Reihe mit dem zweiten ungepolten Kondensator 10 geschaltet und an einem Ende mit dem Lautstärkeregelungs-Stromkreismodul verbunden, während ein Ende des zweiten ungepolten Kondensators 10 geerdet ist.

Der sechste elektrische Widerstand 9 ist in Reihe mit dem dritten ungepolten Kondensator 11 geschaltet und an einem Ende an eine Verbindungsleitung zwischen dem fünften elektrischen Widerstand 8 und dem zweiten ungepolten Kondensator 10 angeschlossen, während ein Ende des dritten ungepolten Kondensators 11 geerdet ist, wobei ein zweites Ausgangskabel an einem Ende an eine Verbindungsleitung zwischen dem sechsten elektrischen Widerstand 9 und dem dritten ungepolten Kondensator 11 angeschlossen und an dem anderen Ende mit dem Leistungsverstärkermodul verbunden ist.

In einem Ausführungsbeispiel ist in der Warneinrichtung ein Digitalfilter vorgesehen. Das Umgebungsgeräusch-Signalerfassungsmodul 26 erfasst echtzeitig ein Schalldrucksignal des äußeren Umgebungsgeräusches und sendet dieses an das Hauptsteuermodul 21. Das Hauptsteuermodul 21 sendet das Schalldrucksignal an den Digitalfilter, in dem eine zyklische Abtastung erfolgt und jede der Proben quantifiziert und kodiert wird, um ein digitales Signal zu erzeugen, das in ein analoges Signal umgewandelt wird, wobei das analoge Signal verarbeitet wird und somit eine Schalldruckinformation erhalten wird.

Ein Stromkreis, bei dem über ein Mikrofon die Lautstärke des Geräusches erfasst wird, ist zusätzlich vorgesehen, wobei die durch Erfassung erhaltene Spannung einem AD-Port einer Hauptsteuerung (Mikroprozessor) zur Digitalfilterung zugeführt wird, um eine Spannung zu erhalten, die eines Schalldrucks eines Signals bestimmter Frequenz entspricht, wobei anhand des Spannungswerts der Schalldruckwert des auszugebenen Tons gesteuert wird.

Der AD-Port der Hauptsteuerung (Mikroprozessor) empfängt einen Schallfeld-Spannungswert der äußeren Umgebung. Da sich der Schalldruck des Umgebungsgeräusches zum großen Teil auf einer bestimmten Frequenz konzentriert, wird unter Heranziehung des Schallfelds eines Geräusches bestimmter Frequenz als Rückführ-Referenzspannung der Schalldruck des auszugebenden Tons in Abhängigkeit von dem Spannungswert anhand eines Digitalfilter-Algorithmus innerhalb der Hauptsteuerung (Mikroprozessor) oder über einen separat vorgesehenen Digitalfilter gesteuert.

In einem Ausführungsbeispiel wird ein Bandpass-Digitalfilter eingesetzt, wobei nach Beobachtung des Frequenzspektrums mittels eines Oszilloskops konkret benötigter Frequenzbereich festgelegt und somit der benötigte Frequenzbereich erhalten wird, wonach in Abhängigkeit von dem Frequenzbereich das konkret zu verwendende Filtermodell mittels der Matlab-Software simuliert und geplant wird, wobei schließlich der durch Matlab festgelegte Digitalfilter-Algorithmus bei CPU oder anderer Hardware, beispielsweise CPLD verwirklicht wird, um einen Digitalfilter zu erzeugen. In der Regel kommen verschiedene bestehende Filteralgorithmen zur Anwendung.

In einem Ausführungsbeispiel umfasst das Sprachchipmodul 22 u.a. einen Sprachchip YMF827. Das Hauptsteuermodul 21 überwacht einen Steuerpin BUSY des Sprachchipmoduls 22. Die Dauer einer aktuell von dem Sprachchipmodul abgespielten Audiodatei wird feststellt. Unter Steuerung von dem Hauptsteuermodul 21 wird ein Steuerbefehl zum Abspielen der nächsten Audiodatei an das Sprachchipmodul gesendet, wenn es festgestellt wird, dass die verbleibende Abspieldauer der Audiodatei einen vorbestimmten Dauerschwellenwert erreicht.

Dabei wird der Steuerpin BUSY des Sprachchips YMF827 überwacht und mittels eines Oszilloskop-Modus die Zeit zur Audioumschaltung ermittelt, wobei beim Umschalten des Audios ein Abspielbefehl vor dieser Zeit ausgegeben und also vor dem Ende des vorherigen Audios der nächste Abspielbefehl ausgegeben wird. Somit wird eine unterbrechungsfreie Audioumschaltung ermöglicht. Beispielsweise erfolgt das Abspielen des Audios in Form einer Loopwiedergabe eines einzigen Audios, in welchem Fall beim Umschalten des Audios ein Unterbruch des Audios zu erwarten ist, wobei hingegen hierbei gemäß einer voreingestellten Zeit ein Audioumschaltungsbefehl im Voraus aktiviert wird.

Ein Audioumschaltungsbefehl wird im Voraus an den Tonabspielchip gesendet, anstatt erst nach Abschluss des Abspielvorgangs des Systems den Audioumschaltungsbefehl auszuführen, womit ein Unterbruch bei der Audioumschaltung infolge einer verzögerten Befehlsausführung ausgeschlossen wird. Beim Abspielen des Audios liegt ein Intervall von mehr als 20 Millisekunden zwischen einer erkannten Änderung von einem hohen elektrischen Pegel zu einem niedrigen elektrischen Pegel bei BUSY und dem Abspielen des Audios vor, wobei das Intervall die Hauptsache für den Unterbruch des Audios darstellt. Die für die Audioumschaltung benötigte Zeit, die im Millisekundenbereich liegt, wird aufgezeichnet und danach als X gekennzeichnet und in CPU-EEPROM eingespeichert. Wenn eine Umschaltung erfolgen soll, muss lediglich X Millisekunden vor dem Abschluss des Abspielvorgangs der Audiodatei der Befehl zum Abspielen des nächsten Audios im Voraus ausgegeben werden.

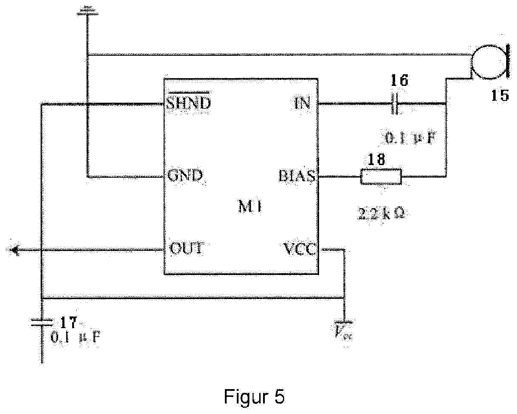

Wie sich aus FIG 5 ergibt, umfasst das
Umgebungsgeräusch-Signalerfassungsmodul in einem Ausführungsbeispiel einen Mikrofonverstärker MAX9812LM1, einen vierten Kondensator 16, einen fünften Kondensator 17 und einen siebten elektrischen Widerstand 18. Ein von einem Mikrofon 15 erfasstes Signal ist mittels einer Eingangsleitung jeweils über den vierten Kondensator 16 und den siebten elektrischen Widerstand 18 mit einem IN-Pin bzw. einem BIAS-Pin des Mikrofonverstärkers MAX9812L verbunden ist, wobei es sich bei dem IN-Pin um einen Signaleingangspin und bei dem BIAS-Pin um einen Spannungskompensationspin handelt.

Ein SHND-Pin des Mikrofonverstärkers MAX9812L ist über den fünften Kondensators 17 geerdet und an eine Verbindungsleitung zwischen dem SHND-Pin und dem fünften Kondensator 17 wird eine Spannung angelegt, wobei ein GND-Pin des Mikrofonverstärkers MAX9812L geerdet ist, ein VCC-Pin des Mikrofonverstärkers MAX9812L die Spannung einführt und ein OUT-Pin des Mikrofonverstärkers MAX9812L ein verstärktes Signal an das Hauptsteuermodul 21 ausgibt. Das Hauptsteuermodul 21 kann einen Spannungswert eines Tons mit einer Frequenz von ungefähr 1000 Hz erhalten, um den Schalldruckwert des auszugebenden Warntons anhand der Rückmeldung einzustellen.

Die akustische Fußgänger-Warneinrichtung mit einer aktiven Vorwarnfunktion für ein Alternativkraftstoff-Fahrzeug nach dem vorstehenden Ausführungsbeispiel weist ein Infrarot-Detektionsmodul und ein Umgebungsgeräusch-Signalerfassungsmodul auf und kann aktiv feststellen, ob ein Ton ausgegeben werden soll, und den Fußgänger-Warnton weitestgehend ausschalten bzw. verringern, womit das Problem gelöst wird, dass der Fußgänger-Warnton stets ausgegeben wird, unabhängig davon, ob vorne ein Fußgänger vorhanden ist, wobei in Abhängigkeit von dem Umgebungs-Schalldruck die Lautstärke geregelt werden kann und zudem auch eine Download-Schnittstelle zur Verfügung steht, so dass der Benutzer einen gewählten Ton herunterladen kann, wobei des Weiteren auch ein Straßenabschnitt-Speicherdrehknopf sowie weitere Funktionen zur Verfügung stehen, was für eine intelligentere Bedienung sorgt.

Das Verfahren und System nach der vorliegenden Erfindung können auf verschiedene Weise verwirklicht werden. Beispielsweise können das Verfahren und System nach der vorliegenden Erfindung mittels von Software, Hardware, Firmware oder irgendeiner Kombination von Software, Hardware und Firmware verwirklicht werden. Die Reihenfolge der Schritte für das Verfahren dient lediglich einer Beschreibung und die erfindungsgemäße Verfahrensschritte werden keineswegs auf die oben beschriebene konkrete Reihenfolge beschränkt, sofern nicht ausdrücklich anders angegeben. Darüber hinaus kann die vorliegende Erfindung in einigen Ausführungsbeispielen als in einem Aufzeichnungsmedium gespeicherte Programme ausgeführt werden, die maschinenlesbare Befehle zum Verwirklichen des erfindungsgemäßen Verfahrens umfassen. Daher umfasst die vorliegende Erfindung ferner ein Aufzeichnungsmedium zum Speichern eines Programms zum Ausführen des erfindungsgemäßen Verfahrens.

Sofern nicht anders angegeben, gilt ein in einer der vorstehenden Ausgestaltungen der vorliegenden Erfindung offenbarter Wertbereich als ein bevorzugter Wertbereich und es versteht sich für Fachleute auf diesem Gebiet, dass es sich bei dem bevorzugten Wertbereich lediglich um Werte mit offensichtlicher Auswirkung oder repräsentative Werte aus zahlreichen denkbaren Werten handelt. Aufgrund der hohen Anzahl von Werten ist eine vollständige Auflistung nicht möglich, weshalb die vorliegende Erfindung einige Werte zur beispielhaften Beschreibung der erfindungsgemäßen Ausgestaltung offenbart, wobei die genannten Werte den Schutzumfang der vorliegenden Erfindung keineswegs einschränken.

Des Weiteren kann bei in fester Verbindung miteinander stehenden Teilen oder Bauteilen, die in der vorliegenden Erfindung offenbart oder erwähnt wurden, eine derartige feste Verbindung sowohl als lösbare feste Verbindung (beispielsweise unter Verwendung eines Bolzens oder einer Schraube zur Verbindung) als auch als unlösbare feste Verbindung (beispielsweise Nietverbindung, Schweißverbindung) verstanden werden, wobei es sich versteht, dass eine gegenseitige feste Verbindung auch durch eine einteilige Struktur (beispielsweise eine einteilige Ausformung mittels eines Gussverfahrens) ersetzt werden kann, es sei denn, dass die Verwendung eines einteiligen Ausformverfahrens offensichtlich nicht möglich ist.

Zudem umfassen die Begriffe, die bei einer der vorstehend offenbarten Ausgestaltungen der vorliegenden Erfindung zum Angeben der Positionsbeziehung oder der Form eingesetzt werden, auch ähnliche oder gleichartige Stellungen bzw. Formen. Irgendein Teil nach der vorliegenden Erfindung kann sowohl aus mehreren separaten Bestandteilen zusammengesetzt als auch als ein einteilig ausgeformtes Teil ausgebildet sein.

Schließlich ist darauf hinzuweisen, dass die vorstehenden Ausführungsbeispiele lediglich einer Beschreibung der Ausgestaltung nach der vorliegenden Erfindung dienen, ohne den Schutzumfang der Erfindung einzuschränken, wobei trotzt der ausführlichen Erläuterung der Erfindung anhand bevorzugter Ausführungsbeispiele es sich für Durchschnittsfachleute auf diesem Gebiet versteht, dass verschiedene Abänderungen oder gleichwertige Substitutionen einiger Merkmale für konkrete Ausführungsformen der vorliegenden Erfindung möglich sind, ohne die Grundideen der Ausgestaltungen nach der vorliegenden Erfindung zu verlassen, wobei diese von dem beanspruchten Umfang der Ausgestaltungen der vorliegenden Erfindung umfasst sein sollen.

## Patentansprüche

1. Akustische Fußgänger-Warneinrichtung mit einer aktiven Vorwarnfunktion für ein Alternativkraftstoff-Fahrzeug, wobei sie ein Hauptsteuermodul (21), ein Sprachchipmodul (22), ein Leistungsverstärkermodul (23) und ein Infrarot-Detektionsmodul (28) umfasst, wobei das Hauptsteuermodul (21) jeweils mit dem Sprachchipmodul (22) und dem Infrarot-Detektionsmodul (28) und das Sprachchipmodul (22) mit dem Leistungsverstärkermodul (23) verbunden sind, wobei das Infrarot-Detektionsmodul (28) erfasst, ob in der Umgebung des Fahrzeugs eine Person vorhanden ist, und ein Infrarot-Detektionssignal ausgibt, und wobei das Hauptsteuermodul (21) das Infrarot-Detektionssignal empfängt und in Abhängigkeit von dem Infrarot-Detektionssignal einen Abspielbefehl an das Sprachchipmodul (22) sendet, wobei das Sprachchipmodul (22) ein akustisches Signal an das Leistungsverstärkermodul (23) sendet, und das Leistungsverstärkermodul (23) einen Lautsprecher (27) zum Abspielen des akustischen Signals antreibt; **dadurch gekennzeichnet, dass** die Warneinrichtung einen Straßenabschnitt-Speicherdrehknopf (29) umfasst, der mit dem Hauptsteuermodul (21) elektrisch verbunden ist, wobei durch Betätigen des Straßenabschnitt-Speicherdrehknopfs (29), beispielweise beim Fahren auf einer Autobahn, ein Warnton voreingestellt
und durch Drehen des Straßenabschnitt-Speicherdrehknopfs (29) in eine bestimmte Richtung die entsprechende Lautstärke geregelt werden kann, so dass bei später/nächster Vorbeifahrt an diesem Straßenabschnitt das Hauptsteuermodul (21) eine Tonausgabe mit der voreingestellten Lautstärke bewirkt, wenn das Infrarot-Detektionsmodul (28) keinen Fußgänger detektiert.

2. Warneinrichtung nach Anspruch 1, **dadurch gekennzeichnet, dass** sie ein Umgebungsgeräusch-Signalerfassungsmodul (26) umfasst, wobei das Umgebungsgeräusch-Signalerfassungsmodul (26) mit dem Hauptsteuermodul (21) verbunden ist und ein Schalldrucksignal des äußeren Umgebungsgeräusches an das Hauptsteuermodul (21) sendet, und das Hauptsteuermodul (21) in Abhängigkeit von dem Schalldrucksignal die Lautstärke des abzuspielenden akustischen Signals bestimmt und in Abhängigkeit von der Lautstärke die Ausgangsleistung des Leistungsverstärkermoduls (23) steuert.

3. Warneinrichtung nach Anspruch 2, **dadurch gekennzeichnet, dass** sie ferner ein CAN-Sendeempfängermodul (25) umfasst, über das (25) das Hauptsteuermodul (21) mit einer Steuerung des Alternativkraftstoff-Fahrzeugs verbunden ist, um ein von der Steuerung des Alternativkraftstoff-Fahrzeugs gesendetes Zustandssignal zu empfangen, das ein Motordrehzahl- und Fahrzeuggeschwindigkeitssignal umfasst, wobei das Hauptsteuermodul (21) in Abhängigkeit von dem Zustandssignal Fahrdaten erstellt und die Fahrdaten an das Sprachchipmodul (22) sendet, das Sprachchipmodul (22) anhand der Fahrdaten ein Fahrzeugmotor-Geräuschsignal erzeugt.

4. Warneinrichtung nach Anspruch 3, **dadurch gekennzeichnet, dass** sie ein Plosiveschutz-Stromkreismodul umfasst, das eine Diode (1), einen ersten elektrischen Widerstand (2), einen zweiten elektrischen Widerstand (3), eine NPN-Triode (4), einen ersten gepolten Kondensator (5), einen dritten elektrischen Widerstand (6) und einen vierten elektrischen Widerstand (7) umfasst, wobei der vierte elektrische Widerstand (7) an einem Ende geerdet und an dem anderen Ende mit einem Emitter der NPN-Triode (4) verbunden ist, wobei der erste gepolte Kondensator (5) mit dem dritten elektrischen Widerstand (6) parallel geschaltet ist, um einen ersten Unterstromkreis zu bilden, wobei der erste elektrische Widerstand (2) an einem Ende mit einem Ende des zweiten elektrischen Widerstands (3) verbunden ist, um einen ersten Verbindungspunkt zu bilden, wobei die Diode (1) an einem Ende mit einem Stromversorgungsmodul oder dem Leistungsverstärkermodul (23) und an dem anderen Ende mit dem ersten Verbindungspunkt verbunden ist, wobei der zweite elektrische Widerstand (3) an dem anderen Ende mit einem Kollektor der NPN-Triode (4) verbunden ist, wobei der erste Unterstromkreis an einem Ende mit dem anderen Ende des ersten elektrischen Widerstands (2) verbunden und dieser Verbindungspunkt mit einer Basis der NPN-Triode (4) verbunden ist, wobei der erste Unterstromkreis an einem zweiten Ende an eine zur Erdung dienende Verbindungsleitung für den vierten elektrischen Widerstand (7) angeschlossen ist, wobei ein erstes Stromausgangskabel an einem Ende an eine Verbindungsleitung zwischen dem vierten elektrischen Widerstand (7) und dem Emitter der NPN-Triode (4) angeschlossen und an dem anderen Ende mit dem Lautsprecher verbunden ist, und wobei Strom über ein Ende der Diode (1) einströmt und nach Strombegrenzung durch den ersten elektrischen Widerstand (2) zur Aufladung des ersten gepolten Kondensators (5) dient, dabei nun die NPN-Triode (4) einen Zustand mit hohem Widerstand darstellt und bei einer Spannung des ersten gepolten Kondensators (5), die einen Schwellenwert erreicht, die NPN-Triode (4) in einen zugeschalteten Zustand gebracht wird.

5. Warneinrichtung nach Anspruch 4, **dadurch gekennzeichnet, dass** sie ein Lautstärkeregelungs-Stromkreismodul und ein RC-Formungsstromkreismodul umfasst, wobei unter Steuerung von dem Hauptsteuermodul das Lautstärkeregelungs-Stromkreismodul ein PWM-Signal mit Rechteckwellen erzeugt, welches PWM-Signal nach Formung über das RC-Formungsstromkreismodul an das Leistungsverstärkermodul gesendet wird, um eine Lautstärkeregelung durchzuführen, wobei das RC-Formungsstromkreismodul einen fünften elektrischen Widerstand (8), einen sechsten elektrischen Widerstand (9), einen zweiten ungepolten Kondensator (10) und einen dritten ungepolten Kondensator (11) umfasst, wobei der fünfte elektrische Widerstand (8) in Reihe mit dem zweiten ungepolten Kondensator (10) geschaltet und an einem Ende mit dem Lautstärkeregelungs-Stromkreismodul verbunden ist, während ein Ende des zweiten ungepolten Kondensators (10) geerdet ist, wobei der sechste elektrische Widerstand (9) in Reihe mit dem dritten ungepolten Kondensator (11) geschaltet und an einem Ende an eine Verbindungsleitung zwischen dem fünften elektrischen Widerstand (8) und dem zweiten ungepolten Kondensator (10) angeschlossen ist, während ein Ende des dritten ungepolten Kondensators (11) geerdet ist, und wobei ein zweites Ausgangskabel an einem Ende an eine Verbindungsleitung zwischen dem sechsten elektrischen Widerstand (9) und dem dritten ungepolten Kondensator (11) angeschlossen und an dem anderen Ende mit dem Leistungsverstärkermodul verbunden ist.

6. Warneinrichtung nach Anspruch 5, **dadurch gekennzeichnet, dass** sie ferner einen Digitalfilter umfasst, wobei ein Schalldrucksignal des äußeren Umgebungsgeräusches durch das Umgebungsgeräusch-Signalerfassungsmodul echtzeitig erfasst und an das Hauptsteuermodul sendet wird, welches Hauptsteuermodul das Schalldrucksignal an den Digitalfilter sendet, in dem eine zyklische Abtastung erfolgt und jede der Proben quantifiziert und kodiert wird, um ein digitales Signal zu erzeugen, das in ein analoges Signal umgewandelt wird, wobei das analoge Signal verarbeitet wird und somit eine Schalldruckinformation erhalten wird.

7. Warneinrichtung nach Anspruch 6, **dadurch gekennzeichnet, dass** das Hauptsteuermodul einen Steuerpin BUSY des Sprachchipmoduls überwacht und die Dauer einer aktuell von dem Sprachchipmodul abgespielten Audiodatei feststellt, wobei unter Steuerung von dem Hauptsteuermodul ein Steuerbefehl zum Abspielen der nächsten Audiodatei an das Sprachchipmodul gesendet wird, wenn es festgestellt wird, dass die verbleibende Abspieldauer der Audiodatei einen vorbestimmten Dauerschwellenwert erreicht.

8. Warneinrichtung nach Anspruch 7, **dadurch gekennzeichnet, dass** das Umgebungsgeräusch-Signalerfassungsmodul einen Mikrofonverstärker (M1), einen vierten Kondensator (16), einen fünften Kondensator (17) und einen siebten elektrischen Widerstand (18) umfasst, wobei ein von einem Mikrofon (15) erfasstes Signal mittels einer Eingangsleitung jeweils über den vierten Kondensator (16) und den siebten elektrischen Widerstand (18) mit einem IN-Pin bzw. einem BIAS-Pin des Mikrofonverstärkers verbunden ist, wobei es sich bei dem IN-Pin um einen Signaleingangspin und bei dem BIAS-Pin um einen Spannungskompensationspin handelt, wobei ein SHND-Pin des Mikrofonverstärkers über den fünften Kondensators (17) geerdet ist und an eine Verbindungsleitung zwischen dem SHND-Pin und dem fünften Kondensator (17) eine Spannung angelegt wird, und wobei ein GND-Pin des Mikrofonverstärkers geerdet ist, ein VCC-Pin des Mikrofonverstärkers die Spannung einführt und ein OUT-Pin des Mikrofonverstärkers ein verstärktes Signal an das Hauptsteuermodul ausgibt.

9. Warneinrichtung nach Anspruch 1, **dadurch gekennzeichnet, dass** das Hauptsteuermodul und das Sprachchipmodul über einen seriellen SPI-Bus miteinander verbunden sind und in der Verbindungsleitung, die das Stromversorgungsmodul (24) mit dem Sprachchipmodul und dem Leistungsverstärkermodul verbindet, ein spannungsabhängiger Widerstand vorgesehen ist.

## Claims

1. Acoustic pedestrian warning device with active forewarning function for an alternative fuel vehicle, wherein it comprises a main control module (21), a voice chip module (22), a power amplifier module (23) and an infrared detection module (28), wherein the main control module (21) is connected to the voice chip module (22) and the infrared detection module (28), and the voice chip module (22) is connected to the power amplifier module (23), wherein the infrared detection module (28) detects whether a person is present in the vicinity of the vehicle and outputs an infrared detection signal, and wherein the main control module (21) receives the infrared detection signal and sends a play command to the voice chip module (22) according to the infrared detection signal, wherein the voice chip module (22) sends an acoustic signal to the power amplifier module (23), and the power amplifier module (23) drives a loudspeaker (27) for playing the acoustic signal; **characterized in that** the warning device comprises a road section memory rotary knob (29) which is electrically connected to the main control module (21), wherein a warning sound can be preset by operating the road section memory rotary knob (29), for example when driving on a Highway, the corresponding volume can be regulated by rotating the road section memory rotary knob (29) to a certain direction, so that for a later / next passing through of this road section, the main control module (21) causes a sound output with the preset volume if the infrared detection module (28) has detected no pedestrian.

2. Warning device according to claim 1, **characterized in that** it comprises an ambient noise signal detection module (26), wherein the ambient noise signal detection module (26) is connected to the main control module (21) and sends a sound pressure signal of the external ambient noise to the main control module (21), and the main control module (21) determines the volume of the acoustic signal to be played according to the sound pressure signal and controls the output power of the power amplifier module (23) according to the volume.

3. Warning device according to claim 2, **characterized in that** it further comprises a CAN transceiver module (25), the main control module (21) is connected to a controller of the alternative fuel vehicle via the CAN transceiver module (25) in order to receive a condition signal sent by controller of the alternative fuel vehicle, which includes an engine speed and vehicle speed signal, wherein the main control module (21) creates driving data according to the condition signal and sends the driving data to the voice chip module (22), a vehicle engine noise signal is generated by the voice chip module (22) based on the driving data.

4. Warning device according to claim 3, **characterized in that** it comprises a plosive protection circuit module which has a diode (1), a first electrical resistor (2), a second electrical resistor (3), an NPN triode (4), a first polarized capacitor (5), a third electrical resistor (6) and a fourth electrical resistor (7), wherein the fourth electrical resistor (7) is grounded at one end and connected at the other end to an emitter of the NPN triode (4), wherein the first polarized capacitor (5) is connected with the third electrical resistor (6) in parallel to form a first subcircuit, wherein the first electrical resistor (2) is connected at one end to one end of the second electrical resistor (3) to form a first connection point, wherein the diode (1) is connected at one end to a power supply module or the power amplifier module (23) and is connected at the other end to the first connection point, wherein the second electrical resistor (3) is connected at the other end to a collector of the NPN triode (4), wherein the first subcircuit is connected at one end to the other end of the first electrical resistor (2) and this connection point is connected to a basis of the NPN triode (4), wherein the first subcircuit is connected at the second end to a connecting line used for grounding for the fourth electrical resistor (7), wherein a first current output cable is connected at one end to a connecting line between the fourth electrical resistor (7) and the emitter of the NPN triode (4) and is connected at the other end to the loudspeaker, and wherein current flows in via one end of the diode (1) and after current limitation through the first electrical resistor (2) charges the first polarized capacitor (5), while the NPN triode (4) now shows a condition with high resistance and brings the NPN triode (4) into a connected state, when the voltage of the first polarized capacitor (5) reaches a threshold value.

5. Warning device according to claim 4, **characterized in that** it comprises a volume control circuit module and an RC forming circuit module, wherein under control of the main control module, the volume control circuit module generates a PWM signal with square waves, the PWM signal is sent to the power amplifier module after forming via the RC forming circuit module to perform volume control, wherein the RC forming circuit module comprises a fifth electrical resistor (8), a sixth electrical resistor (9), a second non-polarized capacitor (10) and a third non-polarized capacitor (11), wherein the fifth electrical resistor (8) is connected in series with the second non-polarized capacitor (10) and at one end connected to the volume control circuit module, while one end of the second non-polarized capacitor (10) is grounded, wherein the sixth electrical resistor (9) is in series connected with the third non-polarized capacitor (11) and at one end connected to a connecting line between the fifth electrical resistor (8) and the second non-polarized capacitor (10), while one end of the third non-polarized capacitor (11) is grounded, and wherein a second output cable is connected at one end to a connecting line between the sixth electrical resistor (9) and the third non-polarized capacitor (11), and is connected at the other end to the power amplifier module.

6. Warning device according to claim 5, **characterized in that** it further comprises a digital filter, wherein a sound pressure signal of the external ambient noise is detected in real time by the ambient noise signal detection module and sent to the main control module, and the main control module sends the sound pressure signal to the digital filter, in which a cyclic Sampling is carried out and each of the samples is quantified and encoded to generate a digital signal which is converted to an analog signal, wherein the analog signal is processed to obtain sound pressure information.

7. Warning device according to claim 6, **characterized in that** the main control module monitors a control pin BUSY of the voice chip module and determines the duration of an audio file currently being played by the voice chip module, wherein a control command for playing the next audio file is sent to the voice chip module under the control of the main control module, when it is determined that the remaining playing duration of the audio file has reached a predetermined duration threshold.

8. Warning device according to claim 7, **characterized in that** the ambient noise signal detection module comprises a microphone amplifier (M1), a fourth capacitor (16), a fifth capacitor (17) and a seventh electrical resistor (18), wherein a signal detected by the microphone (15) is connected to an IN pin or a BIAS pin of the microphone amplifier by means of an input line via the fourth capacitor (16) and the seventh electrical resistor (18) respectively, wherein the IN pin is a signal input pin and the BIAS pin is a voltage compensation pin, wherein a SHND pin of the microphone amplifier is grounded via the fifth capacitor (17) and a voltage is applied to a connecting line between the SHND pin and the fifth capacitor (17), and wherein a GND pin of the microphone amplifier is grounded, a VCC pin of the microphone amplifier introduces the voltage and an OUT pin of the microphone amplifier outputs an amplified signal to the main control module.

9. Warning device according to claim 1, **characterized in that** the main control module and the voice chip module are connected to one another via a serial SPI bus and a voltage-dependent resistor is provided in the connecting line that connects the power supply module (24) with the voice chip module and the power amplifier module.

## Revendications

1. Dispositif d'avertissement acoustique des piétons avec une fonction d'avertissemen active pour un véhicule à carburant alternatif, dans lequel il comprend un module de contrôle principal (21), un module de puce vocale (22), un module d'amplificateur de puissance (23) et un module d étection infrarouge (28), dans lequel le module de contrôle principal (21) est connecté au module de puce vocale (22) et au module détection infrarouge (28), et le module de puce vocale (22) est connecté au module d'amplificateur de puissance (23), dans lequel le module détection infrarouge (28) détect si une personne se trouve à proximité du véhicule et émet un signal de détection infrarouge, et dans lequel le module de contrôle principal (21) reçoit le signal de détection infrarouge et envoie une commande de lecture au module de puce vocale (22) en fonction du signal de détection infrarouge, dans lequel le module de puce vocale (22) envoie un signal acoustique au module d'amplificateur de puissance (23), et le module d'amplificateur de puissance (23) entraîne un haut-parleur (27) pour lire le signal acoustique; **caractérisé en ce que** le dispositif d'avertissement comprend un bouton rotatif de mémoire de section de route (29) qui est connecté électriquement au module de contrôle principal (21), dans lequel le son d'avertissement peut être préréglé en actionnant le bouton rotary de mémoire de section de route (29), par exemple lorsque conduisant sur une autoroute, le volume correspondant peut être réglé en tournant le bouton rotary de mémoire de section de route (29) dans une direction certaine, de sorte que pour un passage ultérieur/suivant de ce section de route, le module de contrôle principal (21) provoque une sortie sonore avec le volume préréglé si le module détection infrarouge (28) n'a détecté aucun piéton.

2. Dispositif d'avertissement selon la revendication 1, **caractérisé en ce qu'**il comprend un module de détection de signal de bruit ambiant (26), dans lequel le module de détection de signal de bruit ambiant (26) est connecté au module de contrôle principal (21) et envoie un signal de pression acoustique du le bruit ambiant externe au module de contrôle principal (21), et le module de contrôle principal (21) détermine le volume du signal acoustique à lire en fonction du signal de pression acoustique et contrôle la puissance de sortie du module d'amplificateur de puissance (23) en fonction du volume.

3. Dispositif d'avertissement selon la revendication 2, **caractérisé en ce qu'**il en outre comprend un module de émetteur-récepteur CAN (25), le module de contrôle principal (21) est connecté à un contrôleur du véhicule à carburant alternatif via le module de émetteur-récepteur CAN (25) pour recevoir un signal de condition envoyé par le contrôleur du véhicule à carburant alternatif, qui comprend un signal de vitesse du moteur et de vitesse du véhicule, dans lequel le module de contrôle principal (21) crée des données de conduite en fonction du signal de condition et envoie les données de conduite au module de puce vocale (22), un signal de bruit du moteur de véhicule est généré par le module de puce vocale (22) sur la base des données de conduite.

4. Dispositif d'avertissement selon la revendication 3, **caractérisé en ce qu'**il comprend un module de circuit de protection plosive qui comporte une diode (1), une première résistance électrique (2), une deuxième résistance électrique (3), une triode NPN (4), un première condensateur polarisé (5), une troisième résistance électrique (6) et une quatrième résistance électrique (7), dans lequel la quatrième résistance électrique (7) est mise à la terre à une extrémité et connectée à un émetteur de la triode NPN (4) à l'autre extrémité, dans lequel le premier condensateur polarisé (5) est relié à la troisième résistance électrique (6) en parallèle pour former un premier sous-circuit, dans lequel la première résistance électrique (2) est connectée à une extrémité de la deuxième résistance électrique (3) à une extrémité pour former un premier point de connexion, dans lequel la diode (1) est connectée à un module d'alimentation ou au module d'amplificateur de puissance (23) à une extrémité et est connectée au premier point de connexionà l'autre extrémité, dans lequel le deuxième résistance électrique (3) est connectée à un collecteur de la triode NPN (4) à l'autre extrémité, dans laquel le premier sous-circuit est connecté à l'autre extrémité de la première résistance électrique (2) à une extrémité et ce point de connexion est connecté à une base de la triode NPN (4), dans lequel le premier sous-circuit est connecté à une ligne de connexion utilisée à la deuxième extrémité pour la mise à la terre de la quatrième résistance électrique (7), dans lequel un premier câble de sortie de courant est connecté à une ligne de connexion entre la quatrième résistance électrique (7) et l'émetteur de la triode NPN (4) à une extrémité et est connecté au haut-parleur à l'autre extrémité, et dans lequel le courant circule en via une extrémité de la diode (1) et après limitation de courant à travers la première résistance électrique (2) charge le premier condensateur polarisé (5), tandis que la triode NPN (4) présente maintenant une condition à haute résistance et amène la triode NPN (4) dans un état connecté, lorsque la tension du premier condensateur polarisé (5) atteint une valeur de seuil.

5. Dispositif d'avertissement selon la revendication 4, **caractérisé en ce qu'**il comprend un module de circuit de contrôle de volume et un module de circuit de mise en forme RC, dans lequel le module de circuit de contrôle de volume génère un signal PWM à ondes carrées sous le contrôle du module de contrôle principal, le signal PWM est envoyé au module d'amplificateur de puissance après mise en forme via le module de circuit de mise en forme RC pour effectuer un contrôle de volume, dans lequel le module de circuit de mise en forme RC comprend une cinquième résistance électrique (8), une sixième résistance électrique (9), un second condensateur non polarisé (10) et un troisième condensateur non polarisé (11), dans lequel la cinquième résistance électrique (8) est reliée en série au second condensateur non polarisé (10) et connectée au module de circuit de contrôle de volume à une extrémité, tandis qu'une extrémité de le seconde condensateur non polarisé (10) est mise à la terre, dans lequel la sixième résistance électrique (9) est reliée en série au troisième condensateur non polarisé (11) et connectée à une ligne de connexion entre la cinquième résistance électrique (8) et le deuxième condensateur non polarisé (10) à une extrémité, tandis qu'une extrémité du troisième condensateur non polarisé (11) est mise à la terre, et dans lequel un deuxième câble de sortie est connecté à une ligne de connexion entre la sixième résistance électrique (9) et le troisième condensateur non polarisé (11) à une extrémité, et est connecté au module d'amplificateur de puissance à l'autre extrémité.

6. Dispositif d'avertissement selon la revendication 5, **caractérisé en ce qu'**il comprend en outre un filtre numérique, dans lequel un signal de pression acoustique du bruit ambiant externe est détecté en temps réel par le module de détection de signal de bruit ambiant et est envoyé au module de contrôle principal, et le module de contrôle principal envoie le signal de pression acoustique au filtre numérique, où l'échantillonnage cyclique est mise en œuvre et chacun des échantillons est quantifié et encodé pour générer un signal numérique qui est converti en un signal analogique, dans lequel le signal analogique est traité pour obtenir l'information de pression acoustique.

7. Dispositif d'avertissement selon la revendication 6, **caractérisé en ce que** le module de contrôle principal surveille une broche de commande BUSY du module de puce vocale et détermine la durée d'un fichier audio en cours de lecture par le module de puce vocale, dans lequel une commande de contrôle pour la lecture du fichier audio suivant est envoyé au module de puce vocale sous la contrôle du module de contrôle principal, lorsqu'il est déterminé que la durée de lecture restante du fichier audio a atteint une valeur de seuil de durée prédéterminée.

8. Dispositif d'avertissement selon la revendication 7, **caractérisé en ce que** le module de détection de signal de bruit ambiant comprend un amplificateur de microphone (M1), un quatrième condensateur (16), un cinquième condensateur (17) et une septième résistance électrique (18), dans lequel un signal détecté par microphone (15) est connecté à une broche IN ou une broche BIAS de l'amplificateur de microphone au moyen d'une ligne d'entrée via le quatrième condensateur (16) et la septième résistance électrique (18) respectivement, dans lequel la broche IN est une broche de entrée de signal et la broche BIAS est une broche de compensation de tension, dans lequel une broche SHND de l'amplificateur de microphone est mise à la terre via le cinquième condensateur (17) et une tension est appliquée à une ligne de connexion entre la broche SHND et le cinquième condensateur (17), et dans lequel une borche GND de l'amplificateur de microphone est mise à la terre, une broche VCC de l'amplificateur de microphone introduit la tension et une broche OUT du amplificateur de microphone émet un signal amplifié vers le module de contrôle principal.

9. Dispositif d'avertissement selon la revendication 1, **caractérisé en ce que** le module de contrôle principal et le module de puce vocale sont connectés l'un à l'autre via un bus série SPI et une résistance dépendante de la tension est prévue dans la ligne de connexion qui relie le module d'alimentation (24) au module de puce vocale et au module d'amplificateur de puissance.
